Europäisches Patentamt

(19) European Patent Office

Office européen des brevets

(11) Numéro de publication: **0 375 764 B1**

(12) **FASCICULE DE BREVET EUROPEEN**

(45) Date de publication de fascicule du brevet: **03.11.93**  (51) Int. Cl.⁵: **G11B 27/02**, G11B 15/02

(21) Numéro de dépôt: **89906792.0**

(22) Date de dépôt: **01.06.89**

(86) Numéro de dépôt internationale :
**PCT/FR89/00271**

(87) Numéro de publication internationale :
**WO 89/12896 (28.12.89 89/30)**

(54) **DISPOSITIF D'ENREGISTREMENT ET DE LECTURE SIMULTANES D'IMAGES DE TELEVISION.**

(30) Priorité: **17.06.88 FR 8808412**

(43) Date de publication de la demande:
**04.07.90 Bulletin 90/27**

(45) Mention de la délivrance du brevet:
**03.11.93 Bulletin 93/44**

(84) Etats contractants désignés:
**CH DE GB LI**

(56) Documents cités:
**EP-A- 0 204 578       DE-A- 3 217 557
FR-A- 2 606 922       US-A- 4 314 285
US-A- 4 408 309       US-A- 4 430 676
US-A- 4 602 297       US-A- 4 750 052**

**PATENT ABSTRACTS OF JAPAN, vol.6, No. 171 (P-140) (1049) 4 September1982, & JP-A-57 088542**

**RUNDFUNKTECHNISCHE MITTEILUNGEN, vol. 22, No. 1, February 1978, HAMBURG DE page 15-21; J. HEITMAN: "Zeitlupenwiedergabe und Suchlauf bei**

**"SegmentedField"-Videorecordern"**

**IMAGE TECHNOLOGY (JOURNAL OF THE BKSTS) vol. 70, No. 5, May 1988, LONDON GB page 158-161; J.D. MILLWARD: "Disc Based Storage Systems"**

(73) Titulaire: **ULMER, Siegfried W.
Le Riou C., Domaine du Loup
F-06800 Cagnes-sur-Mer(FR)**

(72) Inventeur: **ULMER, Siegfried W.
Le Riou C., Domaine du Loup
F-06800 Cagnes-sur-Mer(FR)**

## Description

La présente invention concerne un procédé et un dispositif permettant d'enregistrer des images télévision et de les restituer après un court délai, afin d'éliminer les séances publicitaires et d'autres séquences d'une émission de télévision.

Par élimination on entend que le téléspectateur peut réduire le temps pendant lequel les séances publicitaires le dérangent par un facteur d'au moins 10 et jusqu'à 40 ou plus. A titre d'exemple, une séance publicitaire d'une durée de 2 minutes peut être réduite à une interruption d'une durée de 3 secondes.

Il est précisé que c'est le téléspectateur lui-même qui identifie le début et la fin de la séance publicitaire qu'il veut éliminer, et que c'est lui qui pilote le dispositif de l'invention, par exemple avec l'aide d'une télécommande. La présente invention ne nécessite donc pas une reconnaissance automatique du début et de la fin d'une séance publicitaire, mais saura avantageusement intégrer une tel dispositif.

Par délai court on entend que le téléspectateur peut commencer à regarder l'émission après un temps T qui correspond à peu près à la durée de l'ensemble de toutes les séances publicitaires qu'on veut éliminer de l'émission qu'on souhaite regarder. A titre d'exemple, pour une émission de 2 heures, qui comporte 5 séances publicitaires de 2 minutes chacune, on peut commencer à regarder l'émission 10 minutes après le début de sa transmission.

Des dispositifs pouvant enregistrer, puis restituer, des images télévision, et permettant d'éliminer les séances publicitaires par une lecture à vitesse accélérée sont déjà connus.

L'appareil le plus répandu de ce type est le magnétoscope à cassette. Avec le magnétoscope, l'élimination des séances publicitaires nécessite les étapes suivantes:

- on démarre l'enregistrement de l'émission télévision;
- on attend la fin de l'émission;
- on rebobine la cassette;
- on démarre la lecture de la cassette afin de restituer les images enregistrées;
- dès le début de chaque séance publicitaire, on restitue les images en lecture à vitesse accélérée, de sorte qu'on peut identifier la fin de la séance publicitaire;
- dès la fin de la séance publicitaire, on restitue les images enregistrées à vitesse normale.

Ce dispositif présente un inconvénient majeur, à savoir: pour regarder une émission, il faut d'abord attendre la fin de l'enregistrement, donc la fin de la transmission. A titre d'exemple, si on veut éliminer les séquences publicitaires d'un film programmé de 21 heures à 23 heures, c'est seulement à partir de 23 heures qu'on peut commencer à le regarder.

Ce dispositif présente encore un autre inconvénient, à savoir: la recherche de la fin d'une séance publicitaire est généralement limitée à une lecture à vitesse 9 fois accélérée. A titre d'exemple, une séance publicitaire d'une durée de 2 minutes nécessite toujours 14 secondes pour défiler en lecture à vitesse 9 fois accélérée.

L'alternative à la lecture à vitesse accélérée, l'embobinage de la bande magnétique, ne permet pas non plus de raccourcir ce délai d'une façon importante, car il consiste de mouvements mécaniques relativement lents: le dégagement du mécanisme de lecture de la bande, l'accélération de la bande et des deux bobines de la cassette, leur décélération, et le réengagement du mécanisme de lecture sur la bande. En plus, comme l'embobinage ne permet pas un contrôle visuel pour la recherche de la fin de la séance publicitaire, il faut l'arrêter bien avant la fin supposée de cette séance publicitaire et continuer en lecture à vitesse accélérée.

Le procédé et le dispositif selon la présente invention ont pour but de pallier ces inconvénients, à savoir: d'éliminer les séances publicitaires d'une manière qui permet de regarder une émission de télévision non pas en différée, mais en temps (presque) réel, et qui permet de réduire la durée de l'interruption dû à une séance publicitaire pas seulement par un facteur 9, mais plutôt par un facteur 40.

A cet effet, la présente invention concerne un dispositif pour enregistrer des images télévision et de les restitue après lecture caractérisé en ce qu'il utilise un support d'enregistrement du type mémoire à accès direct à double porte, et qu'il comporte un mécanisme lecteur et un mécanisme enregistreur, le mécanisme lecteur et le mécanisme enregistreur étant séparés et indépendants, pouvant opérer simultanément, et pouvant être placés et déplacés d'une façon indépendante l'un de l'autre sur le support d'enregistrement, et qu'il comporte des mémoires tampons de formatage, de synchronisation et d'adaptation de vitesse.

Les caractéristiques de l'invention ressortiront de la description qui suit, donnée à titre d'exemple non limitatif d'un mode préféré de l'invention:

La mémoire à accès direct du support d'enregistrement est réalisée par une mémoire linéaire à double porte du type semiconducteur ou autre, permettant un accès simultané en écriture et en lecture. Elle comporte un nombre important L de cellules de mémoire, chaque cellule pouvant contenir une image de télévision et les signaux son associés, formatés d'une manière adaptée. Chaque cellule est accédée par son adresse contenue dans le Registre d'Adresse Ecriture (RAE) pour le mécanisme enregistreur et dans le Registre d'Adresse Lecture (RAL) pour le mécanisme lecteur. Des mémoires tampons intermédiaires sont utilisées pour le formatage, la synchronisation, et l'adaptation de vitesse. Un Registre du Déplacement du Mécanisme Ecriture (RDME) et un Registre du Déplacement du Mécanisme Lecture (RDML) permettent de déplacer rapidement le mécanisme enregistreur et le mécanisme lecteur, en ajoutant leur contenu au RAE et au RAL respectivement.

Le fonctionnement d'un tel dispositif est décrit ci-après:

Pour enregistrer, on initialise le RAE:

- à zéro, si la mémoire doit être utilisée à partir de son début,
- à la valeur qu'il avait lors de la fin du dernier enregistrement, si on veut enregistrer à la suite de l'enregistrement précédent,
- à la valeur actuelle du RAL, si on veut enregistrer à la suite de la dernière image qu'on a lu, ou
- à toute autre valeur permettant réaliser une fonction utile.

L'enregistrement comporte les étapes suivantes:

- dès qu'une image vidéo (avec les signaux son associés) est reçue du récepteur du téléviseur, elle est stockée après un formatage éventuel dans la cellule mémoire indiquée par le RAE;
- puis on ajoute "1" à la valeur du RAE afin que l'image vidéo suivante sera écrite dans la cellule mémoire suivante.

Pour lire, on initialise le RAL:

- à zéro, si la restitution d'images doit commencer au début de la mémoire,
- à la valeur qu'il avait lors de la fin de la dernière lecture, si on veut restituer à la suite de la dernière image qu'on a lu,
- à la valeur du RAE moins 1, si on veut restituer ce qu'on est en train d'enregistrer, ou
- à toute autre valeur permettant réaliser une fonction utile.

La lecture comporte les étapes suivantes:

- on lit l'image vidéo (avec les signaux son associés) indiquée par le RAL pour la stocker dans des mémoires tampons;
- puis, après un formatage éventuel, et à la fréquence de F images vidéo par seconde, l'image est transmise a l'écran du téléviseur pour restitution;
- puis on ajoute "1" à la valeur du RAL afin que l'image vidéo suivante sera lu de la cellule mémoire suivante.

Pour lire à vitesse normale en arrière, on procède comme pour la lecture en avant, sauf qu'on retire "1" de la valeur du RAL à la place de l'y ajouter, afin que l'image vidéo suivante sera lu à partir de la cellule mémoire précédente.

Pour lire à vitesse N fois accélérée en avant ou en arrière, on procède comme pour la lecture à vitesse normale, sauf qu'on ajoute/retire "N" respectivement à la place de "1" à/de la valeur du RAL, afin que l'image vidéo suivante sera lu à partir de la N-ième cellule mémoire qui suit/précède la cellule qu'on vient de lire.

Pour lire à vitesse N fois ralentie en avant ou en arrière, on procède comme pour la lecture à vitesse normale, sauf qu'on transmet l'image vidéo N fois au téléviseur pour restitution avant d'ajouter/retirer "1" respectivement à/de la valeur du RAL, afin de restituer le même image vidéo N fois avant de passer à la suivante.

Pour restituer en arrêt sur image, on transmet en permanence la même image vidéo identifiée par la valeur actuelle du RAL.

Pour restituer image par image en avant ou en arrière, on transmet en permanence la même image vidéo identifiée par la valeur actuelle du RAL, et - sur demande - on ajoute/retire "1" respectivement à/de la valeur du RAL, afin de restituer l'image vidéo suivante ou précédente.

Pour déplacer rapidement en avant ou en arrière le mécanisme enregistreur ou le mécanisme lecteur d'un endroit sur le support d'enregistrement vers un autre, on ajoute le contenu N du RDME ou du RDML au RAE ou au RAL respectivement, N étant le nombre d'images vidéo qu'on veut franchir, afin de reprendre l'enregistrement ou la lecture N images vidéo plus loin. Les registres RDME et RDML peuvent être initialisés individuellement. Si le contenu N est négatif, le déplacement se fait en arrière.

La mémoire du support d'enregistrement étant d'une taille limitée de L cellules, deux options sont offertes quand la mise à jour du RAE ou du RAL lors de l'enregistrement, de la lecture, ou du déplacement rapide dépasse la valeur L - 1 ou devient négative en marche arrière:

- soit la fonction en cours s'arrête quand cette condition est remplie,
- soit la fonction continue après remplacement de la valeur du RAE ou du RAL par le modulo L de cette même valeur.

Selon une variante du mode préféré de l'invention, la mémoire linéaire est départagée en M plages et comporte N = M + 1 portes, les M portes avec leurs M registres RAE étant utilisées pour l'enregistrement de M programmes de télévision, l'unique porte de lecture avec son registre RAL permettant toutes les fonctions décrits en haut sur toutes les M plages d'enregistrement.

D'autres modes de réalisation du dispositif selon l'invention consistent à remplacer la mémoire linéaire comme support d'enregistrement par une mémoire rotative à accès direct double porte, telle qu'une mémoire à bulles, un disque magnétique, un disque optique, un disque opto-magnétique, ou de toute autre technologie.

Les caractéristiques de ces modes de réalisation sont semblables à celles décrites en haut pour le mode préféré. Néanmoins, les mécanismes enregistreur et lecteur, bien qu'indépendants l'un de l'autre, sont cependant soumis à la même vitesse angulaire de la mémoire rotative.

Ces modes de réalisation comportent donc en outre plusieurs (N) mécanismes lecteur, plusieurs (M) mécanismes enregistreur, et de mémoires tampons d'adaptation de vitesse supplémentaires.

Toutes les fonctions de lecture et d'avancée rapide sont exécutées à partir de la mémoire tampon, remplie en anticipation par les N mécanismes lecteur à partir de N pistes adjacentes de la mémoire rotative.

Toutes les fonctions d'écriture et d'avancée rapide sont exécutées dans la mémoire tampon, vidée par les M mécanismes enregistreur vers M pistes adjacentes de la mémoire rotative.

La présente invention concerne également un procédé d'enregistrement d'images télévision et de leur restitution en temps presque réel, et de réduction par le lecture à vitesse accélérée du temps pendant lequel les séances publicitaires et d'autres séquences d'une émission de télévision dérangent le téléspectateur, caractérisé en ce qu'il comporte les étapes suivantes:

- on enregistre une émission télévision sur un support d'enregistrement du type mémoire à accès direct à double porte:

 a) un registre d'adresse d'écriture (RAE) est initialisé à zéro

 b) dès qu'une image vidéo avec les signaux son associés est reçue du récepteur de télévision, un mécanisme enregistreur, après un formatage éventuel, l'écrit dans la cellule mémoire indiqué par le RAE

 c) un "1" est ajouté à la valeur du RAE afin que l'image suivante soit écrite dans la cellule mémoire suivante

 d) les séquences b), c) se répètent jusqu'à ce qu'on arrête l'enregistrement ou que le RAE atteint un nombre L des cellules mémoire disponibles;

- on attend le temps T qui correspond à peu près à la durée de l'ensemble de toutes les séances publicitaires qu'on veut éliminer de l'émission qu'on souhaite regarder;

- on démarre la lecture du même support d'enregistrement afin de restituer les images enregistrées sur un écran de télévision:

 e) un registre d'adresse lecture (RAL) est initialisé à zéro

f) un mécanisme lecteur lit l'image vidéo avec les signaux son associés dans la cellule mémoire indiquée par le RAL et la stocke dans des mémoires tampons

g) à partir des mémoires tampons, après un formatage éventuel, et à la fréquence normale de F images vidéo par seconde, l'image est transmise à l'écran du téléviseur pour restitution

h) un "1" est ajouté à la valeur du RAL afin que l'image suivante soit lue de la cellule mémoire suivante

i) les séquences f), g), h) se répètent jusqu'à ce qu'on passe à l'étape suivante du procédé, qu'on arrête la lecture, ou que le RAL atteint le nombre L des cellules mémoire disponibles;

- dès le début de chaque séance publicitaire, on restitue les images en lecture à vitesse N fois accélérée, de sorte qu'on peut réduire la durée de l'interruption dû à une séance publicitaire par un facteur important, tout en pouvant identifier la fin de la séance publicitaire:

 j) le mécanisme lecteur lit l'image vidéo avec les signaux son associés dans la cellule mémoire indiquée par le RAL et la stocke dans les mémoires tampons

 k) à partir des mémoires tampons, après un formatage éventuel, et à la fréquence normale de F images vidéo par seconde, l'image est transmise à l'écran du téléviseur pour restitution

 l) N est ajouté à la valeur du RAL afin que l'image suivante soit lue de la N-ième cellule mémoire qui suit la cellule qu'on vient de lire

 m) les séquences j), k), l) se répètent jusqu'à ce qu'on passe à l'étape suivante du procédé, qu'on arrête la lecture, ou que le RAL atteint le nombre L des cellules mémoire disponibles;

- dès la fui de la séance publicitaire, on restitue les images enregistrées à vitesse normale:

 n) le mécanisme lecteur lit l'image vidéo avec les signaux son associés dans la cellule mémoire indiquée par le RAL et la stocke dans les mémoires tampons

 o) à partir des mémoires tampons, après un formatage éventuel, et à la fréquence normale de F images vidéo par seconde, l'image est transmise à l'écran du téléviseur pour restitution

 p) un "1" est ajouté à la valeur du RAL afin que l'image suivante soit lue de la cellule mémoire suivante

 q) les séquences n), o), p) se répètent jusqu'à ce qu'on demande de nouveau une lecture à vitesse accélérée, qu'on arrête la lecture, ou que le RAL atteint le nombre L des cellules mémoire disponibles.

La présente invention concerne également un procédé pour éliminer des séances publicitaires et d'autres séquences qu'on ne veut pas garder du support d'enregistrement, en copiant successivement les séquences de l'enregistrement qu'on veut garder l'une derrière l'autre, et qu'il comporte les étapes suivantes:

- on place le mécanisme enregistreur au début du support d'enregistrement ou derrière la première séquence de l'enregistrement qu'on souhaite garder:

a) le registre d'adresse d'écriture (RAE) est initialisé à zéro, ou

b) le registre d'adresse d'écriture (RAE) est initialisé à la valeur du registre d'adresse de lecture (RAL);

- on place le mécanisme lecteur au début de la séquence de l'enregistrement qu'on souhaite garder:

c) le RAL n'est pas modifié;

- on fait une copie avec le mécanisme enregistreur des images télévision lues par le mécanisme lecteur, tout en restituant ces images sur l'écran du téléviseur pour contrôle:

d) le mécanisme lecteur lit l'image vidéo avec les signaux son associés dans la cellule mémoire indiquée par le RAL, la stocke dans les mémoires tampons, et la passe au mécanisme enregistreur

e) le mécanisme enregistreur écrit l'image vidéo avec les signaux son associés dans la cellule mémoire indiquée par le RAE

f) à partir des mémoires tampons, après un formatage éventuel, et à la fréquence normale de F images vidéo par seconde, l'image est transmise à l'écran du téléviseur pour restitution

g) "1" est ajouté à la valeur du RAL

h) "1" est ajouté à la valeur du RAE

i) les séquences d), e), f), g), h) se répètent jusqu'à ce qu'on passe à l'étape suivante du procédé, qu'on arrête la copie, ou que le RAL ou le RAE atteint le nombre L des cellules mémoire disponibles;

- au début de chaque séance publicitaire, on arrête de faire la copie, laissant le mécanisme enregistreur sur place, et on cherche la fin de la séance publicitaire, en restituant des images en lecture à vitesse accélérée:

j) le mécanisme enregistreur est arrêté

k) le mécanisme lecteur lit l'image vidéo avec les signaux son associés dans la cellule mémoire indiquée par le RAL et la stocke dans les mémoires tampons

l) à partir des mémoires tampons, après un formatage éventuel, et à la fréquence normale de F images vidéo par seconde, l'image est transmise à l'écran du téléviseur pour restitution

m) N est ajouté à la valeur du RAL afin que l'image suivante soit lue de la N-ième cellule mémoire qui suit la cellule qu'on vient de lire

n) les séquences k), l), m) se répètent jusqu'à ce qu'on passe à l'étape suivante du procédé, qu'on arrête la lecture, ou que le RAL atteint le nombre L des cellules mémoire disponibles;

- a la fin de chaque séance publicitaire, on fait une copie avec le mécanisme enregistreur des images télévision lues par le mécanisme lecteur, tout en restituant ces images sur l'écran du téléviseur:

o) le mécanisme lecteur lit l'image vidéo avec les signaux son associés dans la cellule mémoire indiquée par le RAL, la stocke dans les mémoires tampons, et la passe au mécanisme enregistreur

p) le mécanisme enregistreur écrit l'image vidéo avec les signaux son associés dans la cellule mémoire indiquée par le RAE

q) à partir des mémoires tampons, après un formatage éventuel, et à la fréquence normale de F images vidéo par seconde, l'image est transmise à l'écran du téléviseur pour restitution

r) "1" est ajouté à la valeur du RAL

s) "1" est ajouté à la valeur du RAE

t) les séquences o), p), q), r), s) se répètent jusqu'à ce qu'on passe à l'étape suivante du procédé, qu'on arrête la copie, ou que le RAL ou le RAE atteint le nombre L des cellules mémoire disponibles.

La présente invention concerne aussi deux procédés qui apportent des avantages supplémentaires, à savoir:

- un procédé qui permet faire la copie des images télévision dans un des modes suivants: vitesse normale en avant, vitesse accélérée en avant, vitesse ralentie en avant, vitesse normale en arrière, vitesse accélérée en arrière, vitesse ralentie en arrière, arrêt sur image, image par image en avant, image par image en arrière;

- un procédé qui, au début d'une seance publicitaire, permet faire la recherche de la fin de la séance par un enchaînement de deux fonctions: d'abord, un déplacement rapide du mécanisme lecteur sur le support d'enregistrement; ensuite, une lecture en vitesse accélérée:

a) la valeur du registre du déplacement du mécanisme lecteur (RDML) est ajoutée à la valeur du registre d'adresse lecture (RAL) afin que l'image vidéo avec les signaux son associés soit lue dans la cellule mémoire qui se trouve un nombre de cellules correspondant à la valeur du RDML plus loin sur le support d'enregistrement que celle qu'on vient de lire

b) le mécanisme lecteur lit l'image vidéo avec les signaux son associés dans la cellule mémoire indiquée par le RAL et la stocke dans les mémoires tampons

c) à partir des mémoires tampons, après un formatage éventuel, et à la fréquence normale de F images vidéo par seconde, l'image est transmise à l'écran du téléviseur pour restitution

d) N est ajouté à la valeur du RAL afin que l'image suivante soit lue de la N-ième cellule mémoire qui suit la cellule qu'on vient de lire

e) les séquences b), c), d) se répètent jusqu'à ce qu'on demande de nouveau une lecture à vitesse normale, qu'on arrête la lecture, ou que le RAL atteint le nombre L des cellules mémoire disponibles;

avant l'utilisation de cette fonction, le RDML est initialisé avec le nombre d'images de télévision qui corresponds à la durée la plus courte d'une séance publicitaire.

## Revendications

1. Dispositif pour enregistrer des images télévision et pour les restituer après lecture caractérisé en ce qu'il utilise un support d'enregistrement du type mémoire à accès direct à double porte; qu'il comporte un mécanisme lecteur et un mécanisme enregistreur, le mécanisme lecteur et le mécanisme enregistreur étant séparés et indépendants, pouvant opérer simultanément, et pouvant être placés et déplacés d'une façon indépendante l'un de l'autre sur le support d'enregistrement; qu'il comporte des mémoires tampons de formatage, de synchronisation et d'adaptation de vitesse; que le support d'enregistrement comporte un nombre important L de cellules de mémoire, chaque cellule pouvant contenir une image de télévision et les signaux son associés, formatés d'une manière adaptée; que le mécanisme enregistreur comporte un registre d'adresse écriture (RAE) contenant l'adresse de la cellule de la mémoire à écrire; que le RAE peut être initialisé à n'importe quelle adresse de cellule de la mémoire afin de commencer l'enregistrement à n'importe quel endroit sur le support d'enregistrement; que la fréquence et les algorithmes de mise à jour du RAE permettent plusieurs modes d'enregistrement; que le mécanisme lecteur comporte un registre d'adresse lecture (RAL) contenant l'adresse de la cellule de la mémoire à lire; que le RAL peut être initialisé à n'importe quelle adresse de cellule de la mémoire afin de commencer la lecture à n'importe quel endroit sur le support d'enregistrement; que la fréquence et les algorithmes de mise à jour du RAL permettent plusieurs modes de lecture; qu'il comporte un registre de déplacement du mécanisme enregistreur (RDME) dont le contenu peut être ajouté au RAE pour déplacer rapidement le mécanisme enregistreur; qu'il comporte un registre du déplacement du mécanisme lecteur (RDML) dont le contenu peut être ajouté au RAL pour déplacer rapidement le mécanisme lecteur; que quand la mise à jour du RAE ou du RAL dépasse la valeur L - 1 ou devient négative, la fonction en cours s'arrête, ou elle continue après remplacement de la valeur du RAE ou du RAL par le modulo L de cette même valeur.

2. Dispositif selon la revendication 1 caractérisé en ce qu'il utilise un support d'enregistrement du type mémoire rotative à accès direct double porte; qu'il comporte plusieurs (N) mécanismes lecteur et plusieurs (M) mécanismes enregistreur; qu'il comporte des mémoires tampon d'adaptation de vitesse supplémentaires; que les fonctions de lecture sont exécutées à partir de la mémoire tampon, et que la mémoire tampon est remplie en anticipation par les N mécanismes lecteur à partir de N pistes adjacentes de la mémoire rotative; que les fonctions d'enregistrement sont exécutées dans la mémoire tampon, et que la mémoire tampon est vidée par les M mécanismes enregistreur vers M pistes adjacentes de la mémoire rotative.

3. Dispositif selon l'une des revendications 1 ou 2 caractérisé en ce qu'il copie des enregistrements d'un endroit du support d'enregistrement vers un autre endroit du même support d'enregistrement; que le mécanisme lecteur lit l'image de télévision et les signaux son associés dans la cellule mémoire indiquée par le RAL, les communique au mécanisme enregistreur qui les écrit dans la cellule mémoire indiquée par le RAE, et les restitue sur l'écran du téléviseur pour contrôle.

4. Dispositif selon l'une des revendications 1, 2 ou 3 caractérisé en ce que le(s) mécanisme(s) lecteur(s) restituent, et/ou que le(s) mécanisme(s) enregistreur(s) enregistrent, les images télévision dans un des modes suivants: vitesse normale en avant, vitesse accélérée en avant, vitesse ralentie en avant, vitesse normale en arrière, vitesse accélérée en arrière, vitesse ralentie en arrière, arrêt sur image, image par image en avant, image par image en arrière.

5. Procédé d'enregistrement d'images télévision et de leur restitution en temps presque réel, et de réduction par la lecture à vitesse accélérée du temps pendant lequel des séances publicitaires et d'autres séquences d'une émission de télévision dérangent le téléspectateur, caractérisé en ce qu'il comporte les étapes suivantes:

- on enregistre une émission télévision sur un support d'enregistrement du type mémoire à accès direct à double porte:

   a) un registre d'adresse d'écriture (RAE) est initialisé à zéro

   b) dès qu'une image vidéo avec les signaux son associés est reçue du récepteur de télévision, un mécanisme enregistreur, après un formatage éventuel, l'écrit dans la cellule mémoire indiqué par le RAE

   c) un "1" est ajouté à la valeur du RAE afin que l'image suivante soit écrite dans la cellule mémoire suivante

   d) les séquences b), c) se répètent jusqu'à ce qu'on arrête l'enregistrement ou que le RAE atteint un nombre L des cellules mémoire disponibles;

- on attend le temps T qui correspond à peu près à la durée de l'ensemble de toutes les séances publicitaires qu'on veut éliminer de l'émission qu'on souhaite regarder;

- on démarre la lecture du même support d'enregistrement afin de restituer les images enregistrées sur un écran de télévision:

   e) un registre d'adresse lecture (RAL) est initialisé à zéro

   f) un mécanisme lecteur lit l'image vidéo avec les signaux son associés dans la cellule mémoire indiquée par le RAL et la stocke dans des mémoires tampons

   g) à partir des mémoires tampons, après un formatage éventuel, et à la fréquence normale de F images vidéo par seconde, l'image est transmise à l'écran du téléviseur pour restitution

   h) un "1" est ajouté à la valeur du RAL afin que l'image suivante soit lue de la cellule mémoire suivante

   i) les séquences f), g), h) se répètent jusqu'à ce qu'on passe à l'étape suivante du procédé, qu'on arrête la lecture, ou que le RAL atteint le nombre L des cellules mémoire disponibles;

- dès le début de chaque séance publicitaire, on restitue les images en lecture à vitesse N fois accélérée, de sorte qu'on peut réduire la durée de l'interruption dû à une séance publicitaire par un facteur important, tout en pouvant identifier la fin de la séance publicitaire:

   j) le mécanisme lecteur lit l'image vidéo avec les signaux son associés dans la cellule mémoire indiquée par le RAL et la stocke dans les mémoires tampons

   k) à partir des mémoires tampons, après un formatage éventuel, et à la fréquence normale de F images vidéo par seconde, l'image est transmise à l'écran du téléviseur pour restitution

   l) N est ajouté à la valeur du RAL afin que l'image suivante soit lue de la N-ième cellule mémoire qui suit la cellule qu'on vient de lire

   m) les séquences j), k), l) se répètent jusqu'à ce qu'on passe à l'étape suivante du procédé, qu'on arrête la lecture, ou que le RAL atteint le nombre L des cellules mémoire disponibles;

- dès la fin de la séance publicitaire, on restitue les images enregistrées à vitesse normale:

   n) le mécanisme lecteur lit l'image vidéo avec les signaux son associés dans la cellule mémoire indiquée par le RAL et la stocke dans les mémoires tampons

   o) à partir des mémoires tampons, après un formatage éventuel, et à la fréquence normale de F images vidéo par seconde, l'image est transmise à l'écran du téléviseur pour restitution

   p) un "1" est ajouté à la valeur du RAL afin que l'image suivante soit lue de la cellule mémoire suivante

   q) les séquences n), o), p) se répètent jusqu'à ce qu'on demande de nouveau une lecture à vitesse accélérée, qu'on arrête la lecture, ou que le RAL atteint le nombre L des cellules mémoire disponibles.

6. Procédé selon la revendication 5 caractérisé en ce qu'on élimine des séances publicitaires et d'autres séquences qu'on ne veut pas garder du support d'enregistrement, en copiant successivement les séquences de l'enregistrement qu'on veut garder l'une derrière l'autre, et qu'il comporte les étapes suivantes:

- on place le mécanisme enregistreur au début du support d'enregistrement ou derrière la première séquence de l'enregistrement qu'on souhaite garder:

a) le registre d'adresse d'écriture (RAE) est initialisé à zéro, ou

b) le registre d'adresse d'écriture (RAE) est initialisé à la valeur du registre d'adresse de lecture (RAL);

- on place le mécanisme lecteur au début de la séquence de l'enregistrement qu'on souhaite garder:

c) le RAL n'est pas modifié;

- on fait une copie avec le mécanisme enregistreur des images télévision lues par le mécanisme lecteur, tout en restituant ces images sur l'écran du téléviseur pour contrôle:

d) le mécanisme lecteur lit l'image vidéo avec les signaux son associés dans la cellule mémoire indiquée par le RAL, la stocke dans les mémoires tampons, et la passe au mécanisme enregistreur

e) le mécanisme enregistreur écrit l'image vidéo avec les signaux son associés dans la cellule mémoire indiquée par le RAE

f) à partir des mémoires tampons, après un formatage éventuel, et à la fréquence normale de F images vidéo par seconde, l'image est transmise à l'écran du téléviseur pour restitution

g) "1" est ajouté à la valeur du RAL

h) "1" est ajouté à la valeur du RAE

i) les séquences d), e), f), g), h) se répètent jusqu'à ce qu'on passe à l'étape suivante du procédé, qu'on arrête la copie, ou que le RAL ou le RAE atteint le nombre L des cellules mémoire disponibles;

- au début de chaque séance publicitaire, on arrête de faire la copie, laissant le mécanisme enregistreur sur place, et on cherche la fin de la séance publicitaire, en restituant des images en lecture à vitesse accélérée:

j) le mécanisme enregistreur est arrêté

k) le mécanisme lecteur lit l'image vidéo avec les signaux son associés dans la cellule mémoire indiquée par le RAL et la stocke dans les mémoires tampons

l) à partir des mémoires tampons, après un formatage éventuel, et à la fréquence normale de F images vidéo par seconde, l'image est transmise à l'écran du téléviseur pour restitution

m) N est ajouté à la valeur du RAL afin que l'image suivante soit lue de la N-ième cellule mémoire qui suit la cellule qu'on vient de lire

n) les séquences k), l), m) se répètent jusqu'à ce qu'on passe à l'étape suivante du procédé, qu'on arrête la lecture, ou que le RAL atteint le nombre L des cellules mémoire disponibles;

- a la fin de chaque séance publicitaire, on fait une copie avec le mécanisme enregistreur des images télévision lues par le mécanisme lecteur, tout en restituant ces images sur l'écran du téléviseur:

o) le mécanisme lecteur lit l'image vidéo avec les signaux son associés dans la cellule mémoire indiquée par le RAL, la stocke dans les mémoires tampons, et la passe au mécanisme enregistreur

p) le mécanisme enregistreur écrit l'image vidéo avec les signaux son associés dans la cellule mémoire indiquée par le RAE

q) à partir des mémoires tampons, après un formatage éventuel, et à la fréquence normale de F images vidéo par seconde, l'image est transmise à l'écran du téléviseur pour restitution

r) "1" est ajouté à la valeur du RAL

s) "1" est ajouté à la valeur du RAE

t) les séquences o), p), q), r), s) se répètent jusqu'à ce qu'on passe à l'étape suivante du procédé, qu'on arrête la copie, ou que le RAL ou le RAE atteint le nombre L des cellules mémoire disponibles.

7. Procédé selon la revendication 6 caractérisé en ce qu'on fait la copie des images télévision dans un des modes suivants: vitesse normale en avant, vitesse accélérée en avant, vitesse ralentie en avant, vitesse normale en arrière, vitesse accélérée en arrière, vitesse ralentie en arrière, arrêt sur image, image par image en avant, image par image en arrière.

8. Procédé selon l'une des revendications 5, 6 ou 7 caractérisé en ce qu'au début d'une séance publicitaire, la recherche de la fui de la séance se fait par un enchaînement de deux fonctions: d'abord, un déplacement rapide du mécanisme lecteur sur le support d'enregistrement; ensuite, une lecture en vitesse accélérée:

a) la valeur du registre du déplacement du mécanisme lecteur (RDML) est ajoutée à la valeur du registre d'adresse lecture (RAL) afin que l'image vidéo avec les signaux son associés soit lue dans la cellule mémoire qui se trouve un nombre de cellules correspondant à la valeur du RDML plus loin sur le support d'enregistrement que celle qu'on vient de lire

b) le mécanisme lecteur lit l'image vidéo avec les signaux son associés dans la cellule mémoire indiquée par le RAL et la stocke dans les mémoires tampons

c) à partir des mémoires tampons, après un formatage éventuel, et à la fréquence normale de F images vidéo par seconde, l'image est transmise à l'écran du téléviseur pour restitution

d) N est ajouté à la valeur du RAL afin que l'image suivante soit lue de la N-ième cellule mémoire qui suit la cellule qu'on vient de lire

e) les séquences b), c), d) se répètent jusqu'à ce qu'on demande de nouveau une lecture à vitesse normale, qu'on arrête la lecture, ou que le RAL atteint le nombre L des cellules mémoire disponibles;

qu'avant l'utilisation de cette fonction, le RDML est initialisé avec le nombre d'images de télévision qui corresponds à la durée la plus courte d'une séance publicitaire.

9. Procédé selon l'une des revendications 5, 6, 7 ou 8 caractérisé en ce que le mécanisme enregistreur se déplace rapidement d'un endroit sur le support d'enregistrement vers un autre, en initialisant le RAE avec la somme des valeurs du RAE et du RDME; que le RDME peut être initialisé avec le nombre d'images de télévision qui correspond à la durée de l'enregistrement qu'on veut franchir avant de reprendre l'enregistrement; que le mécanisme lecteur se déplace rapidement d'un endroit sur le support d'enregistrement vers un autre, en initialisant le RAL avec la somme des valeurs du RAL et du RDML; que le RDML peut être initialisé avec le nombre d'images de télévision qui correspond à la durée de l'enregistrement qu'on veut franchir avant de reprendre la lecture; qu'avec un contenu négatif du RDME ou du RDML, le déplacement se fait en arrière.

## Claims

1. Device to record television images and to reproduce them after reading, characterized in that it uses a recording medium of the type double port direct access storage; that it consists of a reading mechanism and a recording mechanism, the reading mechanism and the recording mechanism being separate and independent, capable of operating simultaneously, and capable of being positioned and moved independently one from the other on the recording medium; that it consists of buffer memories for formatting, synchronization, and speed adaptation; that the recording medium consists of a large number L of storage cells, each cell capable of containing a television images and the associated sound signals, formatted in a suitable manner; that the recording mechanism comprises a write address register (WAR) that contains the address of the storage cell it is to write into; that the WAR can be initialized to any storage cell address such that recording can start at any place on the recording medium; that the frequency of and the algorithms for the updating the WAR allow for several modes of recording; that the reading mechanism comprises a read address register (RAR) that contains the address of the storage cell it is to read from; that the RAR can be initialized to any storage cell address such that reading can start at any place of the recording medium; that the frequency of and the algorithms for the updating the RAR allow for several modes of reading; that it consists of a recording (write) mechanism displacement register (WMDR), the contents of which can be added to the WAR in order to move rapidly the recording mechanism; that it consists of a reading mechanism displacement register (RMDR), the contents of which can be added to the RAR in order to move rapidly the reading mechanism; that if the updated WAR or RAR exceeds the value L - 1 or becomes negative, the ongoing function either stops, or it continues after the value of the WAR or RAR has been replaced by the modulus L of that value.

2. Device according to the claim, 1 characterized in that it uses a recording medium of the type dual port rotating direct access storage; that it consists of several (N) reading mechanisms and several (M) recording mechanisms; that it consists of additional buffer memories for speed adaptation; that the reading functions are performed in the buffer memory, and that the buffer memory is filled in advance by the N reading mechanisms from N adjacent tracks of the rotating memory; that the recording functions are performed in the buffer memory, and that the buffer memory is emptied by the M recording mechanisms onto M adjacent tracks of the rotating memory.

3. Device according to one of the claims 1 or 2 characterized in that it copies recordings from one place of the recording medium to another place of this same recording medium; that the reading mechanism reads the television image and the associated sound signals from the storage cell indicated by the RAR, transmits them to the recording mechanism which writes them into the storage cell indicated by the WAR, and reproduces them on the television screen for control.

4. Device according to one of the claims 1, 2 or 3 characterized in that the reading mechanism-(s) reproduce(s) and/or that the recording mechanism(s) record(s) the television images in one of the following modes: normal speed forward, accelerated speed forward, reduced speed forward, normal speed backward, accelerated speed backward, reduced speed backward, still image, image by image forward, image by image backward.

5. Method of recording television images and their reproduction in near-realtime, and of reducing by reading at accelerated speed the time during which commercial breaks and other sequences of a television program disturb the television viewer, characterized in that it consists of the following steps:
- one records the television image on a recording medium of the type double port direct access storage:
  a) a write address register (WAR) is initialized to zero
  b) as soon as a television image with the associated sound signals is received from the television receiver, a recording mechanism writes it, possibly after formatting, into the storage cell indicated by the WAR
  c) a "1" is added to the value of the WAR such that the next image will be written into the next storage cell
  d) the sequence b), c) is repeated until one stops the recording or until the WAR reaches the number L of available storage cells;
- one waits the time T that corresponds approximately to the duration of all commercial breaks one wants to eliminate from the program one wishes to watch;
- one starts the reading from the same recording medium in order to reproduce the recorded images on the television screen:
  e) a read address register (RAR) is initialized to zero
  f) a reading mechanism reads the television image with the associated sound signals from the storage cell indicated by the RAR and stores it in buffer memories
  g) from the buffer memories, possibly after formatting, and at the normal frequency of F television images per second, the image is transmitted to the television screen for restitution

h) a "1" is added to the value of the RAR such that the next image will be read from the next storage cell
i) the sequence f), g), h) is repeated until one goes to the next step of the method, until one stops the reading, or until the RAR reaches the number L of available storage cells;
- at the beginning of each commercial break, one reproduces the images through reading at N times accelerated speed, such that one can reduce by a significant factor the duration of the interruption due to a commercial break, while still being able to identify the end of the commercial break:
  j) the reading mechanism reads the television image with the associated sound signals from the storage cell indicated by the RAR and stores it in the buffer memories
  k) from the buffer memories, possibly after formatting, and at the normal frequency of F television images per second, the image is transmitted to the television screen for restitution
  l) N is added to the value of the RAR such that the next image will be read from the N-th storage cell that follows the cell one was just reading
  m) the sequence j), k), l) is repeated until one goes to the next step of the method, until one stops reading, or until the RAR reaches the number L of available storage cells;
- at the end of the commercial break, one reproduces the recorded images at the normal speed:
  n) the reading mechanism reads the television image with the associated sound signals from the storage cell indicated by the RAR and stores it in the buffer memories
  o) from the buffer memories, possibly after formatting, and at the normal frequency of F television images per second, the image is transmitted to the television screen for restitution
  p) a "1" is added to the value of the RAR such that the next image will be read from the next storage cell
  q) the sequence n), o), p) is repeated until one asks again for reading at accelerated speed, until one stops the reading, or until the RAR reaches the number L of available storage cells.

6. Method according to claim 5 characterized in that one removes commercial breaks and other sequences one does not want to keep from the recording medium, by copying successively the sequences of the recording one wants to keep, one after the other, and in that it consists of the following steps:

- one positions the recording mechanism at the beginning of the recording medium or after the first sequence of the recording one wishes to keep:

  a) the write address register (WAR) is initialized to zero, or

  b) the write address register (WAR) is initialized to the value of the read address register (RAR);

- one positions the reading mechanism at the beginning of the sequence of the recording one wishes to keep:

  c) the RAR is not modified;

- one makes a copy with the recording mechanism of the television images read by the reading mechanism, while reproducing these images on the television screen for control:

  d) the reading mechanism reads the television image with the associated sound signals from the storage cell indicated by the RAR, stores it in the buffer memories, and passes it to the recording mechanism

  e) the recording mechanism writes the television image with the associated sound signals into the storage cell indicated by the WAR

  f) from the buffer memories, possibly after formatting, and at the normal frequency of F television images per second, the image is transmitted to the television screen for restitution

  g) "1" is added to the value of the RAR

  h) "1" is added to the value of the WAR

  i) the sequence d), e), f), g), h) is repeated until one goes to the next step of the method, until one stops copying, or until the RAR or the WAR reaches the number L of available storage cells;

- at the beginning of each commercial break, one stops making the copy, leaving the recording mechanism in place, and one searches the end of the commercial break, by reproducing the images through reading at accelerated speed:

  j) the recording mechanism is stopped

  k) the reading mechanism reads the television image with the associated sound signals from the storage cell indicated by the RAR and stores it in the buffer memories

  l) from the buffer memories, possibly after formatting, and at the normal frequency of F television images per second, the image is transmitted to the television screen for restitution

  m) N is added to the value of the RAR such that the next image will be read from the N-th storage cell that follows the cell one was just reading

  n) the sequence k), l), m) is repeated until one goes to the next step of the method, until one stops reading, or until the RAR reaches the number L of available storage cells;

- at the end of each commercial break, one makes a copy with the recording mechanism of the television image read by the reading mechanism, while reproducing these images on the television screen:

  o) the reading mechanism reads the television image with the associated sound signals from the storage cell indicated by the RAR, stores it in the buffer memories, and passes it to the recording mechanism

  p) the recording mechanism writes the television image with the associated sound signals into the storage cell indicated by the WAR

  q) from the buffer memories, possibly after formatting, and at the normal frequency of F television images per second, the image is transmitted to the television screen for restitution

  r) "1" is added to the value of the RAR

  s) "1" is added to the value of the WAR

  t) the sequence o), p), q), r), s) is repeated until one goes to the next step of the method, until one stops copying, or until the RAR or the WAR reach the number L of available storage cells.

7. Method according to claim 6 characterized in that one makes the copy of the television images in one of the following modes: normal speed forward, accelerated speed forward, reduced speed forward, normal speed backward, accelerated speed backward, reduced speed backward, still image, image by image forward, image by image backward.

8. Method according to one of the claims 5, 6 or 7 characterized in that, at the beginning of the commercial break, the search for the end of the break is performed by the series of two functions: first, a rapid movement of the reading mechanism on the recording medium; then, reading at accelerated speed:

a) the value of the reading mechanism displacement register (RMDR) is added to the value of the read address register (RAR) such that the television image with the associated sound signals will be read from the storage cell that is located a number of cells corresponding to the value of the RMDR further on the recording medium than the one one was just reading

b) the reading mechanism reads the television image with the associated sound signals from the storage cell indicated by the RAR and stores it in the buffer memories

c) from the buffer memories, possibly after formatting, and at the normal frequency of F television images per second, the image is transmitted to the television screen for restitution

d) N is added to the value of the RAR such that the next image will be read from the N-th storage cell that follows the cell one was just reading

e) the sequence b), c), d) is repeated until one asks again for reading at normal speed, until one stops the reading, or until the RAR reaches the number L of available storage cells;

in that, prior to the use of this function, the RMDR is initialized with the number of television images that corresponds to the duration of the shortest commercial break.

9. Method according to one of the claims 5, 6, 7 or 8 characterized in that the recording mechanism is moved rapidly from one place of the recording medium to another, by initializing the WAR with the sum of the values of the WAR and the WMDR; that the WMDR can be initialized with the number of television images that corresponds to the duration of the recording one wishes to jump over before recommencing the recording; that the reading mechanism is moved rapidly from one place of the recording medium to another, by initializing the RAR with the sum of the values of the RAR and the RMDR; that the RMDR can be initialized with the number of television images that corresponds to the duration of the recording one wishes to jump over before recommencing the reading; that with a negative contents of the WMDR or the RMDR, the movement is done backwards.

**Patentansprüche**

1. Vorrichtung zum Aufzeichnen von Fernsehbildern und deren Wiedergabe dadurch gekennzeichnet, daß sie einen Aufzeichnungsspeicher vom Typ Speicher mit direktem Zugriff und zwei Pforten benutzt; daß sie aus einer Lesevorrichtung und einer Aufzeichnungsvorrichtung besteht, wobei die Lesevorrichtung und die Aufzeichnungsvorrichtung voneinander getrennt und unabhängig sind, gleichzeitig arbeiten können, und unabhängig voneinander auf dem Aufzeichnungsspeicher positioniert und verschoben werden können; daß sie aus Pufferspeichern zur Formatierung, Synchronisation, und Geschwindigkeitsanpassung besteht; daß der Aufzeichnungsspeicher aus einer großen Zahl L von Speicherzellen besteht, von denen jede ein in geeigneter Form formatiertes Fernsehbild und die dazugehörenden Tonsignale aufzeichnen kann; daß die Aufzeichnungsvorrichtung aus einem Aufzeichnungsadressenregister (AAR) besteht, das die Adresse der Speicherzelle enthält in die geschrieben werden soll; daß das AAR mit jeder beliebigen Speicherzellenadresse initialisiert werden kann damit das Aufzeichnen an jeder beliebigen Stelle des Aufzeichnungsspeichers beginnen kann; daß die Frequenz und die Algorithmen der Aktualisierung des AAR mehrere Weisen des Aufzeichnens erlauben; daß die Lesevorrichtung aus einem Leseadressenregister (LAR) besteht, das die Adresse der Speicherzelle enthält aus der gelesen werden soll; daS das LAR mit jeder beliebigen Speicherzellenadresse initialisiert werden kann damit das Lesen an jeder beliebigen Stelle des Aufzeichnungsspeichers beginnen kann; daß die Frequenz und die Algorithmen der Aktualisierung des LAR mehrere Weisen des Lesens erlauben; daß sie aus einem Register der Verschiebung der Aufzeichnungsvorrichtung (RVAV) besteht, dessen Inhalt dem AAR zuaddiert werden kann um die Aufzeichnungsvorrichtung schnell zu verschieben; daß sie aus einem Register der Verschiebung der Lesevorrichtung (RVLV) besteht, dessen Inhalt dem LAR zuaddiert werden kann um die Lesevorrichtung schnell zu verschieben; daß wenn die Aktualisierung des AAR oder des LAR den Wert L - 1 überschreitet oder negativ wird, die laufende Funktion entweder stoppt, oder sie fortgesetzt wird nachdem der Wert des AAR oder des LAR durch den Modulus L dieses Wertes ersetzt wird.

**2.** Vorrichtung nach Anspruch 1 dadurch gekennzeichnet, daß sie einen Aufzeichnungsspeicher vom Typ rotierender Speicher mit direktem Zugriff und zwei Pforten benutzt; daß sie aus mehreren (N) Lesevorrichtungen und mehreren (M) Aufzeichnungsvorrichtungen besteht; daß sie aus zusäztlichen Pufferspeichern zur Geschwindigkeitsanpassung besteht; daß die Lesefunktionen aus dem Pufferspeicher ausgeführt werden, und daß der Pufferspeicher im voraus durch N Lesevorrichtungen von N nebeneinanderliegenden Spuren des rotierenden Speichers gefüllt wird; daS die Aufzeichnungsfunktionen in dem Pufferspeicher ausgeführt werden, und daß der Pufferspeicher durch M Aufzeichnungsvorrichtungen auf M nebeneinanderliegende Spuren des rotierenden Speichers entleert wird.

**3.** Vorrichtung nach einem der Ansprüche 1 oder 2 dadurch gekennzeichnet, daß sie Aufzeichnungen von einer Stelle des Aufzeichnungsspeicher nach einer andern Stelle desselben Aufzeichnungsspeichers kopiert; daß die Lesevorrichtung das Fernsehbild mit den dazugehörenden Tonsignalen in der von dem LAR angegebenen Speicherzelle liest, es an die Aufzeichnungsvorrichtung überträgt, die es dann in der vom AAR angegebenen Speicherzelle aufzeichnet, und es auf dem Bildschirm zur Kontrolle wiedergibt.

**4.** Vorrichtung nach einem der Ansprüche 1, 2 oder 3 dadurch gekennzeichnet, daß die Lesevorrichtung(en) die Fernsehbilder liest(lesen), und/oder die Aufzeichnungsvorrichtung(en) sie aufzeichnet(aufzeichnen), in einer der folgenden Weisen: normale Geschwindigkeit vorwärts, beschleunigte Geschwindigkeit vorwärts, verlangsamte Geschwindigkeit vorwärts, normale Geschwindigkeit rückwärts, beschleunigte Geschwindigkeit rückwärts, verlangsamte Geschwindigkeit rückwärts, Standbild, Bild nach Bild vorwärts, Bild nach Bild rückwärts.

**5.** Verfahren zur Aufzeichnen von Fernsehbildern und deren fast gleichzeitige Wiedergabe, und zur Verkürzung durch Lesen mit beschleunigter Geschwindigkeit der Zeit während der der Fernsehzuschauer durch Werbespots und andere Szenen eines Fernsehprogramms gestört wird, dadurch gekennzeichnet, daß es aus den folgenden Schritten besteht:
- man zeichnet das Fernsehprogramm auf einem Aufzeichnungsspeicher vom Typ Speicher mit direktem Zugriff und zwei Pforten auf:

a) ein Aufzeichnungsadressenregister (AAR) wird mit Null initialisiert
b) jeweils wenn ein Fernsehbild mit den dazugehörenden Tonsignalen empfangen wird, zeichnet es eine Aufzeichnungsvorrichtung, nach einer eventuellen Formatierung, in der vom AAR angegebenen Speicherzelle auf
c) eine "1" wird dem Wert des AAR zuaddiert damit das nächste Bild in die nächste Speicherzelle aufgezeichnet wird
d) die Folge b), c) wiederholt sich bis man die Aufzeichnung stoppt oder bis das AAR die Zahl L der verfügbaren Speicherzellen erreicht;
- man wartet eine Zeit T die in etwa der Dauer aller Werbespots entspricht, die man aus der gewünschten Fernsehsendung entfernen möchte;
- man startet das Lesen von demselben Aufzeichnungsspeicher um die aufgezeichneten Bilder auf dem Bildschirm wiederzugeben:
e) ein Leseadressenregister (LAR) wird mit Null initialisiert
f) eine Lesevorrichtung liest das Fernsehbild mit den dazugehörenden Tonsignalen aus der vom LAR angegebenen Speicherzelle und speichert es in Pufferspeichern
g) das Fernsehbild wird aus den Pufferspeichern, nach einer eventuellen Formatierung, und mit der normalen Freqenz von F Bildern pro Sekunde, auf den Bildschirm zur Wiedergabe übertragen
h) eine "1" wird dem Wert des LAR zuaddiert damit das nächste Bild aus der nächsten Speicherzelle gelesen wird
i) die Folge f), g), h) wiederholt sich bis man zum nächsten Schritt des Verfahrens weitergeht, bis man das Lesen stoppt, oder bis das LAR die Zahl L der verfügbaren Speicherzellen erreicht;
- vom Anfang jeden Werbespots an gibt man die Bilder mit N-fach beschleunigter Geschwindigkeit wieder, sodaß man die Dauer der Unterbrechung durch einen Werbespot um einen erheblichen Faktor reduzieren und gleichzeitig das Ende des Werbespots erkennen kann:
j) die Lesevorrichtung liest das Fernsehbild mit den dazugehörenden Tonsignalen aus der vom LAR angegebenen Speicherzelle und speichert es in den Pufferspeichern
k) das Fernsehbild wird aus den Pufferspeichern, nach einer eventuellen Formatierung, und mit der normalen Freqenz von F Bildern pro Sekunde, auf den Bildschirm zur Wiedergabe übertragen

l) N wird dem Wert des LAR zuaddiert damit das nächste Bild aus der N-sten Speicherzelle gelesen wird, die der gerade gelesenen folgt

m) die Folge j), k), l) wiederholt sich bis man zum nächsten Schritt des Verfahrens weitergeht, bis man das Lesen stoppt, oder bis das LAR die Zahl L der verfügbaren Speicherzellen erreicht;

- am Ende eines Werbespots gibt man die aufgezeichneten Bilder mit normaler Geschwindigkeit wieder:

n) die Lesevorrichtung liest das Fernsehbild mit den dazugehörenden Tonsignalen aus der vom LAR angegebenen Speicherzelle und speichert es in den Pufferspeichern

o) das Fernsehbild wird aus den Pufferspeichern, nach einer eventuellen Formatierung, und mit der normalen Freqenz von F Bildern pro Sekunde, auf den Bildschirm zur Wiedergabe übertragen

p) eine "1" wird dem Wert des LAR zuaddiert damit das nächste Bild aus der nächsten Speicherzelle gelesen wird

q) die Folge n), o), p) wiederholt sich bis man von neuem Lesen mit beschleunigter Geschwindigkeit verlangt, bis man das Lesen stoppt, oder bis das LAR die Zahl L der verfügbaren Speicherzellen erreicht.

6. Verfahren nach Anspruch 5 dadurch gekennzeichnet, daß man Werbespots und andere Szenen, die man nicht behalten will, vom Aufzeichnungsspeicher entfernt, indem man nacheinander die Szenen der Aufzeichnung, die man behalten will, eine hinter die andere kopiert, und daß sie aus den folgenden Schritten besteht:

- man plaziert die Aufzeichnungsvorrichtung an den Anfang des Aufzeichnungsspeichers oder nach der ersten Szene der Aufzeichnung, die man behalten will:
a) das Aufzeichnungsadressenregister (AAR) wird mit Null initialisiert, oder
b) das Aufzeichnungsadressenregister (AAR) wir mit dem Wert des Leseadressenregisters (LAR) initialisiert;
- man plaziert die Lesevorrichtung an den Anfang der Szene der Aufzeichnung, die man behalten will:
c) das LAR wird nicht modifiziert;
- man kopiert mit der Aufzeichnungsvorrichtung die von der Lesevorrichtung gelesenen Fernsehbilder, und gibt gleichzeitig diese Bilder auf dem Bildschirm zur Kontrolle wieder:

d) die Lesevorrichtung liest das Fernsehbild mit den dazugehörenden Tonsignalen aus der vom LAR angegebenen Speicherzelle, speichert es in den Pufferspeichern, und gibt es an die Aufzeichnungsvorrichtung weiter

e) die Aufzeichnungsvorrichtung schreibt das Fernsehbild mit den dazugehörenden Tonsignalen in die vom AAR angegebene Speicherzelle

f) das Fernsehbild wird aus den Pufferspeichers, nach einer eventuellen Formatierung, und mit der normalen Freqenz von F Bildern pro Sekunde, auf den Bildschirm zur Wiedergabe übertragen

g) "1" wird dem Wert des LAR zuaddiert

h) "1" wird dem Wert des AAR zuaddiert

i) die Folge d), e), f), g), h) wiederholt sich bis man zum nächsten Schritt des Verfahrens weitergeht, bis man das Kopieren stoppt, oder bis das LAR oder das AAR die Zahl L der verfügbaren Speicherzellen erreicht;

- am Anfang jedes Werbespots stoppt man das Kopieren, läßt die Aufzeichnungsvorrichtung am Platz, und sucht das Ende des Werbespots, indem man die Bilder mit beschleunigter Geschwindigkeit wiedergibt:

j) die Aufzeichnungsvorrichtung wird gestoppt

k) die Lesevorrichtung liest das Fernsehbild mit den dazugehörenden Tonsignalen aus der vom LAR angegebenen Speicherzelle und speichert es in den Pufferspeichern

l) das Fernsehbild wird aus den Pufferspeichern, nach einer eventuellen Formatierung, und mit der normalen Freqenz von F Bildern pro Sekunde, auf den Bildschirm zur Wiedergabe übertragen

m) N wird dem Wert des LAR zuaddiert damit das nächste Bild aus der N-sten Speicherzelle gelesen wird, die der gerade gelesenen Zelle folgt

n) die Folge k), l), m) wiederholt sich bis man zum nächsten Schritt des Verfahrens weitergeht, bis man das Lesen stoppt, oder bis das LAR die Zahl L der verfügbahren Speicherzellen erreicht;

- am Ende jedes Werbespots kopiert man mit der Aufzeichnungsvorrichtung die von der Lesevorrichtung gelesenen Fernsehbilder und gibt gleichzeitig diese Bilder auf dem Bildschirm zur Kontrolle wieder:

o) die Lesevorrichtung liest das Fernsehbild mit den dazugehörenden Tonsignalen aus der vom LAR angegebenen Speicherzelle, speichert es in den Pufferspeichern, und gibt es an die Aufzeichnungsvorrichtung weiter

p) die Aufzeichnungsvorrichtung schreibt das Fernsehbild mit den dazugehörenden Tonsignalen in die vom AAR angegebene Speicherzelle

q) das Fernsehbild wird aus den Pufferspeichern, nach einer eventuellen Formatierung, und mit der normalen Freqenz von F Bildern pro Sekunde, auf den Bildschirm zur Wiedergabe übertragen

r) "1" wird dem Wert des LAR zuaddiert

s) "1" wird dem Wert des AAR zuaddiert

t) die Folge o), p), q), r), s) wiederholt sich bis man zum nächsten Schritt des Verfahrens weitergeht, bis man das Kopieren stoppt, oder bis das LAR oder das AAR die Zahl L der verfügbaren Speicherzellen erreicht.

7. Verfahren nach Anspruch 6 dadurch gekennzeichnet, daß man die Fernsehbilder in einer der folgenden Weisen kopiert: normale Geschwindigkeit vorwärts, beschleunigte Geschwindigkeit vorwärts, verlangsamte Geschwindigkeit vorwärts, normale Geschwindigkeit rückwärts, beschleunigte Geschwindigkeit rückwärts, verlangsamte Geschwindigkeit rückwärts, Standbild, Bild nach Bild vorwärts, Bild nach Bild rückwärts.

8. Verfahren nach einem der Ansprüche 5, 6 oder 7 dadurch gekennzeichnet, daß, am Anfang eines Werbespots, die Suche nach dem Ende des Spots durch das Aneinanderreihen von zwei Funktionen ausgeführt wird: zuerst ein schnelles Verschieben der Lesevorrichtung auf dem Aufzeichnungsspeicher; dann Lesen mit beschleunigter Geschwindigkeit:

a) der Wert des Registers der Verschiebung der Lesevorrichtung (RVLV) wird dem Wert des Leseadressenregisters (LAR) zuaddiert damit das Fernsehbild mit den dazugehörenden Tonsignalen aus der Speicherzelle gelesen wird, die sich eine Zahl von Zellen, entsprechend dem Wert des RVLV, weiter auf dem Aufzeichnungsspeicher befindet, als die, die man gerade gelesen hat

b) die Lesevorrichtung liest das Fernsehbild mit den dazugehörenden Tonsignalen aus der vom LAR angegebenen Speicherzelle und speichert es in den Pufferspeichern

c) das Fernsehbild wird aus den Pufferspeichern, nach einer eventuellen Formatierung, und mit der normalen Freqenz von F Bildern pro Sekunde, auf den Bildschirm zur Wiedergabe übertragen

d) N wird dem Wert des LAR zuaddiert damit das nächste Bild aus der N-sten Speicherzelle gelesen wird, die der gerade gelesenen Zelle folgt

e) die Folge b), c), d) wiederholt sich bis man von neuem Lesen mit normaler Geschwindigkeit verlangt, bis man das Lesen stoppt, oder bis das LAR die Zahl L der verfügbaren Speicherzellen erreicht;

daß vor Benutzung dieser Funktion, das RVLV mit der Zahl der Fernsehbilder initialisiert wird, die der Mindestdauer eines Werbespots entspricht.

9. Verfahren nach einem der Ansprüche 5, 6, 7 oder 8 dadurch gekennzeichnet, daß die Aufzeichnungsvorrichtung sich schnell von einer Stelle des Aufzeichnungsspeichers nach einer anderen verschiebt, indem man das AAR mit der Summe der Werte des AAR und des RVAV initialisiert; daß das RVAV initialisiert werden kann mit der Zahl der Fernsehbilder die der Dauer der Aufzeichnung entspricht, die man überspringen will bevor man die Aufzeichnung wiederaufnimmt; daß die Lesevorrichtung sich schnell von einer Stelle des Aufzeichnungsspeichers nach einer anderen verschiebt, indem man das LAR mit der Summe der Werte des LAR und des RVLV initialisiert; daß das RVLV initialisiert werden kann mit der Zahl der Fernsehbilder die der Dauer der Aufzeichnung entspricht, die man überspringen will bevor man das Lesen wiederaufnimmt; daß, mit einem negativen Inhalt des RVAV oder des RVLV, die Verschiebung rückwärts ausgeführt wird.